# EUROPÄISCHE PATENTSCHRIFT

(11) **EP 3 906 522 B1**
(45) Veröffentlichungstag und Bekanntmachung des Hinweises auf die Patenterteilung: **02.04.2025**
(21) Anmeldenummer: 20710777.2
(22) Anmeldetag: 25.02.2020
(51) Int. Cl.: G06Q 50/06

(54) **COMPUTERGESTÜTZTES ENERGIEMANAGEMENTVERFAHREN UND ENERGIEMANAGEMENTSYSTEM**
COMPUTER-BASED METHOD FOR MANAGING ENERGY AND ENERGY MANAGEMENT SYSTEM
PROCESSUS DE GESTION DE L'ÉNERGIE ASSISTÉ PAR ORDINATEUR ET SYSTÈME DE GESTION DE L'ÉNERGIE

(30) Priorität: 03.04.2019 EP 19167043
(43) Veröffentlichungstag der Anmeldung: 10.11.2021
(73) Patentinhaber: Siemens Aktiengesellschaft, 80333 München (DE)
(72) Erfinder: BAUMGÄRTNER, Thomas, 91056 Erlangen (DE); LANGEMEYER, Stefan, 90489 Nürnberg (DE); THIEM, Sebastian, 91413 Neustadt an der Aisch (DE); WAGNER, Lisa, 90475 Nürnberg (DE)
(74) Vertreter: Siemens Patent Attorneys
(86) Internationale Anmeldenummer: PCT/EP2020/054827
(87) Internationale Veröffentlichungsnummer: WO 2020/200588

(56) Entgegenhaltungen:
- US-A1- 2012 296 482
- US-A1- 2016 363 948

## Beschreibung

Die Erfindung betrifft ein computergestütztes Energiemanagementverfahren gemäß dem Oberbegriff des Patentanspruches 1 sowie ein Energiemanagementsystem gemäß dem Oberbegriff des Patentanspruches 9.

Ein Energiemanagementverfahren, kurz ein Energiemanagement, betrifft die vorausschauende Planung und/oder den Betrieb von Energiesystemen, die insbesondere energetische Erzeugungs- und/oder Verbrauchseinheiten umfassen.

Hierbei kann ein Energiemanagement eine vorausschauende, organisierte und/oder systematisierte Koordination von Beschaffung, Wandlung, Verteilung und/oder Nutzung von Energie, beispielsweise von Wärme, Kälte und/oder elektrischer Energie, zur Deckung der Anforderungen unter Berücksichtigung ökologischer und/oder ökonomischer Zielsetzungen umfassen.

Beispielsweise umfassen Gebäudeautomationssysteme ein Energiemanagementsystem (englisch: Building Energy Management System; abgekürzt BEMS). Hierbei sind wesentliche Aufgaben des Energiemanagementsystems eine energieeffiziente Steuerung oder Regelung der Komponenten der Gebäudeinfrastruktur (Energiesystem), ein Schutz der Komponenten der Gebäudeinfrastruktur, sowie eine Bereitstellung eines angeforderten Komforts, beispielsweise mittels einer Regelung einer Raumtemperatur eines Raumes des Gebäudes.

Eine der wesentlichen Aufgaben eines Energiemanagementverfahrens oder eines Energiemanagementsystems für ein Energiesystem ist eine Koordination von einer energiesysteminternen Erzeugung einer Energieform und einem energiesysteminternen Verbrauch der Energieform. Energieformen können thermische Energie, insbesondere Wärme oder Kälte, elektrische Energie oder chemische Energie sein. Insbesondere für erneuerbar erzeugte Energieformen, beispielsweise mittels Photovoltaikanlagen, Energiespeicher und/oder mittels steuerbaren und/oder regelbaren Lasten, beispielsweise ein Laden von Elektrofahrzeugen, ist eine Steuerung oder Regelung mittels eines Energiemanagementverfahrens beziehungsweise mittels eines Energiemanagementsystems, vorteilhaft.

Weiterhin kann ein Energiemanagementsystem elektrische Messungen, eine Überwachung der Infrastruktur des Energiesystems sowie ein Datenanalyseverfahren und/oder ein Prognoseverfahren umfassen.

Weiterhin kann ein Energiemanagementverfahren eine Vorhersage, das heißt eine Prognose eines Lastprofils des Energiesystems, beispielsweise 24 Stunden im Voraus ermöglichen. Hierzu kann ein Optimierungsmodul vorgesehen sein, welches die entsprechende Last und somit einen Betrieb des Energiesystems für einen zukünftigen Zeithorizont, beispielsweise 24 Stunden, simuliert und dadurch optimiert. Hierbei führt das Optimierungsmodul gemäß fester regelmäßiger Aufrufintervalle jeweils eine solche Simulation des Betriebes des Energiesystem mit einer festgelegten zeitlichen Auflösung (Zeitschrittweite) durch. Hierbei ist nachteilig, dass der feste Aufruf der Simulationen typischerweise nicht optimal ist.

Das Dokument US 2016/363948 A1 offenbart ein Energiemanagementverfahren, das auf einer Optimierung basiert, wobei mittels der Optimierung ein möglichst optimaler Betriebsfahrplan (Schedule) ermittelt wird.

Das Dokument US 2012/296482 A1 betrifft ein Energiemanagementverfahren, bei welchem verbesserte Einnahmen bezüglich Energiemärkte erzielt werden sollen.

Das Dokument WO 2017/203610 A1 betrifft eine Vorrichtung zur Schätzung einer Stromerzeugungsmenge, die dazu ausgebildet ist, die Stromerzeugungsmenge einer an ein Verteilungsnetz angeschlossenen Stromerzeugungsanlage besonders genau abzuschätzen.

Das Dokument US 2017/285612 A1 betrifft ebenfalls ein Verfahren und eine Vorrichtung für einen gewinnoptimierten Betrieb von Energiesystemen.

Der vorliegenden Erfindung liegt die Aufgabe zugrunde, ein verbessertes Energiemanagement bereitzustellen.

Die Aufgabe wird durch ein computergestütztes Energiemanagementverfahren mit den Merkmalen des unabhängigen Patentanspruches 1 sowie durch ein Energiemanagementsystem mit den Merkmalen des unabhängigen Patentanspruches 11 gelöst. In den abhängigen Patentansprüchen sind vorteilhafte Ausgestaltungen und Weiterbildungen der Erfindung angegeben.

Bei dem erfindungsgemäßen computergestützten Energiemanagementverfahren für ein Energiesystem, wird mittels einer Steuervorrichtung der Betrieb des Energiesystems basierend auf einer oder mehreren Simulationen des Betriebes gesteuert, wobei der Betrieb des Energiesystems für einen festgelegten Zeithorizont mit einer festgelegten Zeitschrittweite gemäß einem festgelegten zeitlichen Aufrufintervall mittels einem Optimierungsmodul, das mit der Steuervorrichtung zum Datenaustauch gekoppelt ist, regelmäßig simuliert wird. Das erfindungsgemäße Energiemanagementverfahren ist gekennzeichnet dadurch, dass in Abhängigkeit eines Parameters
- bei einer Veränderung des Parameters eine vom festgelegten Aufrufintervall abweichende zusätzliche Simulation des Betriebes des Energiesystems in Abhängigkeit des veränderten Parameters durchgeführt wird; und/oder
- innerhalb kritischer Zeitbereiche, in welchen der Wert des Parameters oberhalb eines vorab festgelegten Schwellenwertes ist, wenigstens eine in den kritischen Zeitbereich fallende regelmäßige Simulation mit einer zur festgelegten Zeitschrittweite kleineren oder größeren Zeitschrittweite durchgeführt wird; wobei
- das Energiesystem gemäß der zusätzlichen Simulation und/oder der regelmäßigen Simulation betrieben wird.

Erfindungsgemäß ist der Parameter eine energiesystemintern erneuerbar erzeugte elektrische Leistung.

Typischerweise wird der Betrieb mittels einer Optimierung berechnet beziehungsweise simuliert, sodass die Begriffe Simulation und Optimierung in der vorliegenden Erfindung äquivalent sein können. Mit anderen Worten ist die Simulation typischerweise eine Optimierung.

Gemäß der vorliegenden Erfindung wird zunächst, wie bereits bei bekannten Energiemanagementverfahren, zu festen Aufrufzeiten, das heißt gemäß dem festen Aufrufintervall, der Betrieb des Energiesystems regelmäßig mittels des Optimierungsmoduls simuliert. Mit anderen Worten liegt zwischen zwei Simulationen ein Zeitintervall, das dem Aufrufintervall entspricht. Der Betrieb des Energiesystems kann eine oder mehrere Komponenten des Energiesystems umfassen. Jede der regelmäßigen Simulationen wird für einen festen Zeithorizont und mit einer festen Diskretisierung der Zeitkoordinate durchgeführt. Die Diskretisierung der Zeitkoordinate entspricht der Zeitschrittweite. Kennzeichnend für diese regelmäßig durchgeführten Simulationen ist, dass diese zu festen und regelmäßigen Zeiten mit festem Zeithorizont und fester Zeitschrittweite durchgeführt werden. Die Simulationen sind computergestützt und werden mittels des Optimierungsmoduls, beispielsweise einer Rechenvorrichtung, durchgeführt oder ausgeführt werden. Das Optimierungsmodul kann ebenfalls als Simulationsmodul bezeichnet werden. Mittels des Optimierungsmodul wird ein möglichst optimaler Betrieb mittels einer mathematischen/numerischen Optimierung basierend auf einer Zielfunktion, die maximiert oder minimiert werden soll, berechnet beziehungsweise simuliert. Für typische Energiesysteme sind die Optimierungen/Simulationen äußerst komplex und können somit nur computergestützt durchgeführt oder ausgeführt werden. Die Simulationen bilden die Grundlage für eine bezüglich des Startzeitpunktes der Simulation zukünftige Steuerung oder Regelung des Energiesystems. Mit anderen Worten wird das Energiesystem für einen festen Zeitraum gemäß der Simulation betrieben. Durch eine darauffolgende Simulation wird der vorliegende Betrieb des Energiesystems aktualisiert und bis zum Vorliegen der nächsten Simulation gemäß der vorangegangenen Simulation betrieben.

Erfindungsgemäß wird in Abhängigkeit des Parameters, der eine energiesystemintern erneuerbar erzeugte elektrische Leistung ist, eine bezüglich der regelmäßigen Simulationen zusätzliche Simulation durchgeführt, falls eine Änderung des Parameters vorliegt (erste Ausprägung der vorliegenden Erfindung), und/oder die Zeitschrittweite innerhalb bestimmter kritischer Bereiche von in den kritischen Bereichen fallenden regelmäßigen Simulationen verkleinert oder vergrößert (zweite Ausprägung der vorliegenden Erfindung).

Die Zeitschrittweite wird grundsätzlich bezüglich der für die regelmäßigen Simulationen festgelegten Zeitschrittweite verändert, das heißt vergrößert oder verkleinert Das erfindungsgemäße Vorgehen, das heißt das Durchführen einer zusätzlichen Simulation und/oder das Verändern der Zeitschrittweite für eine der regelmäßigen Simulation hängt vom Parameter an sich ab.

Beispielsweise wird bei einer Änderung der erneuerbar erzeugten elektrischen Leistung eine zusätzliche Simulation durchzuführen.

Ein Vorteil der vorliegenden Erfindung ist somit, dass das bekannte starre Konzept der regelmäßigen Simulationen aufgebrochen wird und das Energiemanagement auf Veränderungen des Parameters dynamisch reagieren kann. Liegt eine Veränderung vor, so wird nicht wie im Stand der Technik diese Veränderung erst durch die nächste regelmäßige Simulation miterfasst, sondern erfindungsgemäß eine zusätzliche Simulation durchgeführt, die beispielsweise zeitlich zwischen zwei regelmäßigen Simulationen angeordnet ist. Mit anderen Worten wird die zusätzliche Simulation durch die Änderung des wenigstens einen Parameters getriggert oder ausgelöst.

Ein weiterer Vorteil der vorliegenden Erfindung ist, dass in kritischen Zeitbereichen mit einer höheren oder kleineren zeitlichen Auflösung gerechnet wird. Mit anderen Worten wird in den kritischen Zeitbereichen die Zeitschrittweite innerhalb einer regelmäßigen Simulation, die in den kritischen Zeitbereich zeitlich fällt, verkleinert oder vergrößert. Dadurch kann vorteilhafterweise ebenfalls dynamisch auf kritische Zeitbereiche und somit kritische Werte des Parameters reagiert werden. Die kritischen Zeitbereich sind hierbei dadurch gekennzeichnet, dass der Wert des Parameters oberhalb eines für den Parameter festgelegten Schwellenwertes ist. Mit anderen Worten ist der Wert des Parameters innerhalb der kritischen Zeitbereiche erhöht. Soll ein kritischer Zeitbereich dadurch gekennzeichnet werden, dass der Wert des Parameters unterhalb eines Schwellenwertes liegt, so kann dies stets durch Bildung der Kehrwerte in einen Parameter übergeführt werden, dessen Wert oberhalb eines Schwellenwertes liegt. Mit anderen Worten sind die kritischen Zeitbereiche dadurch gekennzeichnet, dass der Wert wenigstens des Parameters außerhalb eines für diesen festgelegten Normbereiches liegt. Fällt nun eine der regelmäßigen Simulationen zeitlich in einen solchen kritischen Zeitbereich, so wird die Zeitschrittweite dieser Simulation verändert, typischerweise verkleinert. Dadurch kann in den kritischen Zeitbereichen eine erhöhte zeitliche Auflösung erreicht werden. Vorteilhafterweise wird dadurch die Simulation - gerade in kritischen Zeitbereichen - verbessert, wodurch das Energiemanagementverfahren insgesamt verbessert wird.

Die erfindungsgemäßen zwei Ausprägungen (zusätzliche Simulation und Änderung der Zeitschrittweite) ermöglichen somit vorteilhafterweise eine Dynamisierung des Energiemanagements.

Das erfindungsgemäße Energiemanagementsystem für ein Energiesystem umfasst wenigstens eine Steuervorrichtung, mittels welcher der Betrieb des Energiesystems basierend auf einer oder mehreren Simulationen des Betriebes steuerbar ist, ein Optimierungsmodul, das mit der Steuervorrichtung zum Datenaustausch gekoppelt ist und mittels welchem ein Betrieb des Energiesystems für einen vorab festgelegten Zeithorizont mit einer vorab festgelegten Zeitschrittweite gemäß einem vorab festgelegten zeitlichen Aufrufintervalls regelmäßig simulierbar ist. Erfindungsgemäß ist in Abhängigkeit eines Parameters
- mittels des Optimierungsmoduls bei einer Veränderung des Parameters eine vom vorab festgelegten Aufrufintervall abweichende zusätzliche Simulation des Betriebes des Energiesystems in Abhängigkeit des veränderten Parameters durchführbar; und/oder
- mittels des Optimierungsmoduls innerhalb kritischer Zeitbereiche, in welchen der Wert des Parameters oberhalb eines vorab festgelegten Schwellenwertes ist, wenigstens eine in den kritischen Zeitbereich fallende regelmäßige Simulation mit einer zur vorab festgelegten Zeitschrittweite kleineren oder größeren Zeitschrittweite durchführbar; wobei
- das Energiesystem gemäß der zusätzlichen Simulation und/oder der regelmäßigen Simulation durch das Energiemanagementsystem betreibbar ist.

Erfindungsgemäß ist ebenfalls für das Energiemanagementsystem der Parameter eine energiesystemintern erneuerbar erzeugte elektrische Leistung.

Das Optimierungsmodul kann ebenfalls als Simulationsmodul und/oder Planungsmodul bezeichnet werden. Das Optimierungsmodul kann eine Rechenvorrichtung sein.

Weiterhin kann das Optimierungsmodul wenigstens ein erstes und zweites Optimierungsmodul umfassen, wobei das erste Optimierungsmodul für die zusätzliche Simulation und das zweite Optimierungsmodul für die regelmäßigen Simulationen mit kleinerer Zeitschrittweite vorgesehen oder ausgebildet ist. Ferner kann das Optimierungsmodul in weitere Module unterteilt sein beziehungsweise weitere Module umfassen, die jeweils eine bestimmte Simulation durchführen. So kann für die Day-Ahead-Optimierung, für die Intraday-Optimierung und/oder für die Load-Manager-Optimierung (Short-Term-Optimierung) jeweils ein solches Modul vorgesehen sein.

Weiterhin kann das Optimierungsmodul weitere spezialisierte Module umfassen, beispielsweise ein Prognosemodul, ein Konfigurationsmodul und/oder ein Modellparametermodul. Mit anderen Worten kann das Optimierungsmodul bezüglich seiner verschiedenen Aufgaben modular ausgestaltet sein.

Das Energiemanagementsystem umfasst weiterhin eine Steuervorrichtung, welche mit dem Optimierungsmodul wenigstens bezüglich des Austauschs von Daten gekoppelt ist, wobei die Steuervorrichtung zur Steuerung oder Regelung der Komponenten des Energiesystems basierend auf einer oder mehreren der Simulationen ausgebildet ist.

Es ergeben sich zum erfindungsgemäßen Energiemanagementverfahren gleichartige und gleichwertige Vorteile des erfindungsgemäßen Energiemanagementsystems.

Bei einer Änderung der erneuerbar erzeugten elektrischen Leistung kann eine vom zeitlichen Ablauf der regelmäßigen Simulationen abweichende zusätzliche Simulation durchgeführt oder getriggert oder gestartet. Hierbei ist die erneuerbar erzeugte elektrische Leistung energiesystemintern erzeugt. Liegt beispielsweise durch eine Änderung, beispielsweise durch eine höhere Sonneneinstrahlung, ein Überschuss an erneuerbar erzeugter elektrischer Leistung beziehungsweise Energie vor, so wird eine zusätzliche Simulation unter Berücksichtigung des neuen und somit aktuelleren Wertes der erneuerbar erzeugten elektrischen Leistung/Energie durchgeführt oder getriggert oder gestartet.

In einer vorteilhaften Ausgestaltung der Erfindung wird die zusätzliche Simulation mittels eines Rechenzentrums, insbesondere mittels eines verteilten Rechenzentrums und/oder eines Servers und/oder Cloud-Servers, durchgeführt.

Weiterhin ist es vorteilhaft, wenn eine in den kritischen Zeitbereich fallende regelmäßige Simulation mit einer kleineren Zeitschrittweite mittels eines Rechenzentrums, insbesondere mittels eines verteilten Rechenzentrums und/oder Servers und/oder Cloud-Servers, durchgeführt wird.

Mit anderen Worten wird die zusätzliche Simulation oder die Simulation mit der kleineren Zeitschrittweite an das Rechenzentrum ausgelagert. Das ist deshalb von Vorteil, da bereits installierte Energiemanagementsysteme typischerweise keine ausreichende Rechenleistung für eine zusätzliche Simulation und/oder eine Verkleinerung der Zeitschrittweite aufweisen. Durch die Auslagerung dieser Simulationen an ein gegebenenfalls externes Rechenzentrum kann die vorliegende Erfindung ebenfalls bei solchen in diesem Sinne rechenschwachen Energiemanagementsysteme verwendet oder implementiert werden.

Gemäß einer vorteilhaften Ausgestaltung der Erfindung wird die zusätzliche Simulation und/oder die in den kritischen Zeitbereich fallende regelmäßige Simulation dann an das Rechenzentrum ausgelagert, wenn das Rechenzentrum größtenteils mit erneuerbar erzeugter Energie betrieben wird.

Mit anderen Worten erfolgt die Auslagerung der Simulationen an das Rechenzentrum in Abhängigkeit ökologischer Gesichtspunkte. Weiterhin könnte die Auslagerung zu den Zeiten, in welchen das Rechenzentrum beispielsweise mit Solarstrom betrieben wird, günstiger sein. In diesem Beispiel ist es somit vorteilhaft die Simulationen am Tage, insbesondere um die Mittagszeit, und nicht in der Nacht auszulagern. Somit könnten in der Mittagszeit Simulationen mit höherer zeitlicher Auflösung durchgeführt werden. Alternativ oder ergänzend könnte das Energiemanagementsystem, beispielsweise für weitere Energiemanagementsysteme, Rechenleistung zur Verfügung stellen.

Mit anderen Worten kann die Auslagerung der Simulationen an das Rechenzentrum dynamisch sein. Dies ist vorteilhaft, da die flexible Verfügbarkeit von Rechenleistung von der Auslastung des Rechenzentrums abhängen kann. Ein Betreiber des Rechenzentrums könnte daher die Bereitstellung der Rechenleistung mit dynamischen Entgelten steuern. Durch die dynamische Auslagerung kann das Energiemanagementsystem auf dies reagieren. Ebenfalls kann der netzdienliche Betrieb des Rechenzentrums, beispielsweise bei einer Überlast, bei einem Ausfall oder bei einer Berücksichtigung volatiler Erzeugung erneuerbarer Energien zu einem zeitlich begrenzten Engpass der Rechenleistung führen. In einem solchen Fall kann das Energiemanagementsystem beziehungsweise das Energiemanagementverfahren die Simulationen stets mit gleicher zeitlicher Genauigkeit und/oder einer größeren Zeitschrittweite und/oder mit einem längeren Aufrufintervall an das externe Rechenzentrum auslagern und durchführen. Dadurch können die Simulationen beziehungsweise ein den Simulationen zugrundeliegendes Optimierungsproblem vorteilhafterweise mit weniger externer Rechenleistung berechnet werden.

In einer vorteilhaften Weiterbildung der Erfindung wird die zusätzliche Simulation ebenfalls mit einer bezüglich der vorab festgelegten Zeitschrittweite kleineren oder größeren Zeitschrittweite durchgeführt.

Dadurch wird vorteilhafterweise die zusätzliche Simulation verbessert. Typischerweise ist die Simulation umso genauer oder effizienter bezüglich des Betriebes des Energiesystems, je kleiner die Zeitschrittweite ist. Steht jedoch weniger Rechenleistung intern und/oder extern zur Verfügung, so kann es vorteilhaft sein, die Zeitschrittweite zu vergrößern, um trotz der beschränkten Rechenressourcen dennoch eine Simulation durchzuführen.

Gemäß einer vorteilhaften Ausgestaltung der Erfindung wird eine zusätzliche Simulation mit einer kleineren Zeitschrittweite innerhalb eines zeitlichen Endbereiches der vorab festgelegten Zeitschrittweite einer regelmäßigen Simulation durchgeführt.

Mit anderen Worten ist der Endbereich der vorab festgelegten Zeitschrittweite typischerweise ein kritischer Zeitbereich. Am Ende der Zeitschrittweite, die beispielsweise 15 Minuten beträgt, muss typischerweise Energie zusätzlich, abseits der Planung oder Vorhersage, erzeugt oder bereitgestellt und/oder verbraucht werden. Dieser Effekt wird vorteilhafterweise dadurch vermindert, dass in diesen kritischen Zeitbereichen eine zusätzliche Simulation mit einer kleineren Zeitschrittweite durchgeführt wird.

In einer vorteilhaften Weiterbildung der Erfindung wird der Zeithorizont auf 24 Stunden, die Zeitschrittweite auf 15 Minuten und das Aufrufintervall auf 24 Stunden festgelegt; oder der Zeithorizont auf 24 Stunden, die Zeitschrittweite auf 15 Minuten und das Aufrufintervall auf 1 Stunde festgelegt; oder der Zeithorizont auf 1 Stunde, die Zeitschrittweite auf 1 Minute und das Aufrufintervall auf 1 Minute festgelegt.

Mit anderen Worten wird eine sogenannte Day-Ahead-Optimierung oder eine sogenannte Intraday-Optimierung oder eine sogenannte Load-Manager-Optimierung (Short-Term-Optimierung) durchgeführt.

Die Day-Ahead-Optimierung weist einen Zeithorizont von 24 Stunden auf. Dadurch wird der Betrieb des Energiesystems für die nächsten 24 Stunden simuliert beziehungsweise berechnet. Weiterhin weist die Day-Ahead-Optimierung eine Zeitschrittweite von 15 Minuten auf. Mit anderen Worten ist der Zeithorizont von 24 Stunden in 15 Minuten Zeitintervalle für die Simulation unterteilt beziehungsweise diskretisiert. Das Aufrufintervall bei der Day-Ahead-Optimierung ist 24 Stunden. Mit anderen Worten wird alle 24 Stunden eine neue Day-Ahead-Optimierung durchgeführt beziehungsweise gestartet, sodass die Day-Ahead-Optimierung täglich durchgeführt wird.

Die Intraday-Optimierung weist im Unterschied zur Day-Ahead-Optimierung ein Aufrufintervall von 1 Stunde auf. Mit anderen Worten wird eine Intraday-Optimierung jede Stunde durchgeführt beziehungsweise gestartet.

Die Load-Manager-Optimierung weist einen Zeithorizont von 1 Stunde auf. Dadurch wird der Betrieb des Energiesystems für die nächste Stunde simuliert beziehungsweise berechnet. Die Zeitschrittweite einer Load-Manager-Optimierung ist entsprechend auf 1 Minute verkürzt. Die Load-Manager-Optimierung wird jede Minute aufgerufen beziehungsweise gestartet, sodass das Aufrufintervall der Load-Manager-Optimierung 1 Minute ist.

Gemäß einer vorteilhaften Ausgestaltung der Erfindung werden die regelmäßigen Simulationen und/oder die zusätzliche Simulation mittels eines Optimierungsverfahrens berechnet.

Ein Optimierungsverfahren oder eine Optimierung im Sinne der vorliegenden Erfindung ist eine mathematische und/oder numerische beziehungsweise computergestützte Optimierung basierend auf einer Zielfunktion. Hierbei kann die Zielfunktion das Energiesystem und seine Komponenten modellieren. Hierzu weist die Zielfunktion Variablen und Modellparameter auf. Die Zielfunktion wird minimiert oder maximiert, wobei typischerweise kein exaktes Minimum oder Maximum vorliegen muss, sondern es ist ausreichend, den Extremwerten bis auf einen vorab festgelegten Fehler nahezukommen. Mit anderen Worten werden die Werte der Variablen der Zielfunktion derart bestimmt, dass die Zielfunktion minimiert oder maximiert wird. In diesem Sinne bedeutet optimal, dass die Zielfunktion minimiert oder maximiert ist. Die Zielfunktion können die Gesamtkohlenstoffdioxidemission des Energiesystems, der Gesamtprimärenergieeinsatz des Energiesystems und/oder die Kosten/Betriebskosten des Energiesystems sein. Typischerweise erfolgt die Optimierung der Zielfunktion unter einer Mehrzahl von Nebenbedingungen, die die Variablen und/oder Modellparameter der Zielfunktion erfüllen müssen. Die Optimierung, das heißt das Auffinden der optimalen Zielfunktion und somit der optimalen Werte der Variablen der Zielfunktion ist für komplexe Systeme, beispielsweise wie vorliegend Energiesysteme, typischerweise nur computergestützt möglich. Hierbei wird mittels der Optimierung der Betrieb des Energiesystems optimiert, beispielsweise im Hinblick auf eine möglichst hohe energetische Effizienz des Energiesystems, eine möglichst geringe Kohlenstoffdioxidemission und/oder auf möglichst geringe Kosten/Betriebskosten.

Mit anderen Worten wird typischerweise ein möglichst optimaler zukünftiger Betrieb des Energiesystems durch die regelmäßigen Simulationen und/oder der zusätzlichen Simulation simuliert beziehungsweise berechnet. Mittels der Simulationen kann das Energiesystem zukünftig möglichst optimal betrieben werden. Insbesondere werden die Day-Ahead-Optimierung, die Intraday-Optimierung, die Load-Manager-Optimierung und die zusätzlichen Simulationen mittels einer Optimierung berechnet. Die Simulation/Optimierung ist insbesondere deshalb erforderlich, da nicht unzählige Energiesysteme zum Auffinden eines möglichst optimal betriebenen Energiesystems installiert beziehungsweise betrieben werden können. Die für die Optimierung vorgesehenen Modellparameter, die beispielsweise die Zielfunktion parametrisieren beziehungsweise initialisieren, sind typischerweise physikalische Größen, die zu einem gegebenen Zeitpunkt oder aus historischen Daten mittels Messungen am vorliegenden Energiesystem erfasst werden können. Mit anderen Worten basiert die Parametrisierung und somit die Zielfunktion auf physikalisch erfassten Messdaten des Energiesystems. Dadurch wird sichergestellt, dass das Energiesystem physikalisch realistisch durch die Zielfunktion modelliert wird. Die computergestützte Optimierung stellt somit ein wichtiges technisches Werkzeug bereit, um Energiesysteme möglichst effizient im Rahmen eines Energiemanagementverfahrens zu betreiben.

In einer vorteilhaften Weiterbildung der Erfindung weist das Energiemanagementsystem wenigstens eine Datenschnittstelle zum Austausch von Datencontainern mit einem bezüglich des Energiemanagementsystems externen Energienetz und/oder externen Energiemarkt auf.

Der Datencontainer kann eine Blockkette (englisch: Blockchain) sein. Mit anderen Worten können die Daten über die Datenschnittstelle mittels einer Blockchain ausgetauscht werden.

Mittels der Datenschnittstelle kann die zusätzliche Simulation aufgrund eines Energiemarktsignals getriggert beziehungsweise gestartet beziehungsweise ausgelöst werden. Beispielsweise erfolgt dies dann, wenn der externe Energiemarkt mittels der Datenschnittstelle die Information übermittelt, dass ein Überschuss an erneuerbar erzeugter elektrischer Leistung/Energie vorhanden ist oder ein Preissprung vorliegt.

Eine zusätzliche Simulation könnte weiterhin von einem dynamischen Energiemarkt, beispielsweise einem Peer-2-Peer basierten Energiemarkt ausgelöst werden. Hierbei wird eine entsprechende Information zum Auslösen der zusätzlichen Simulation über die Datenschnittstelle an das Energiemanagementsystem übertragen. Tritt insbesondere innerhalb eines lokalen Stromverteilernetzes ein Problem auf, beispielsweise ein unvorhergesehener Einspeiseüberschuss, so kann das Energiemanagementsystem vorteilhafterweise zeitnah reagieren und den Betrieb des Energiesystems diesbezüglich und durch das Durchführen einer zusätzlichen Simulation optimieren. Gemäß einem mikroökonomischen Aspekt ist in einem solchen Szenario dasjenige Energiesystem vorteilhaft aufgestellt, welches zeitnah beziehungsweise möglichst schnell auf die Änderung innerhalb des Energiemarktes reagiert. Gemäß einem makroökonomischen Aspekt ist es ebenfalls von Vorteil, den problematischen Zustand schnellstmöglich zu vermindern oder zu beheben. Beispielsweise startet das Energiemanagementsystem hierzu eine zusätzliche Simulation/Optimierung mit einem vergleichsweise kurzen Zeithorizont, beispielsweise für die nächsten 5 Minuten.

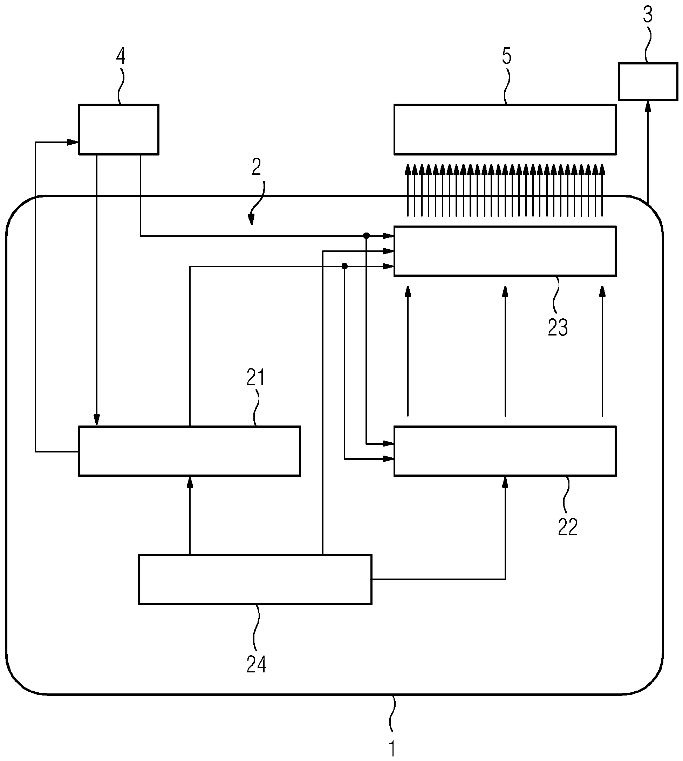

Weitere Vorteile, Merkmale und Einzelheiten der Erfindung ergeben sich aus dem im Folgenden beschriebenen Ausführungsbeispielen sowie anhand der Zeichnung. Dabei zeigt die einzige Figur schematisiert ein Energiemanagementsystem gemäß einer Ausgestaltung der vorliegenden Erfindung.

Grundsätzlich verdeutlichen die Pfeile in der Figur jeweils einen möglichen Datenaustausch zwischen den dargestellten Komponenten. Die Datenaustausche können grundsätzlich und unabhängig von der Darstellung in der Figur bidirektional oder unidirektional sein und mittels Datencontainern, insbesondere mittels Blockketten (Blockchain), erfolgen.

Das in der Figur dargestellte Energiemanagementsystem 1 umfasst ein Optimierungsmodul 2. Das Optimierungsmodul 2 ist dazu ausgebildet einen Betrieb eines Energiesystems, welches beispielsweise das Energiemanagementsystem umfasst, für zukünftige Zeitpunkte für einen festgelegten Zeithorizont mit einer festgelegten Zeitschrittweite gemäß einem festgelegten zeitlichen Aufrufintervall regelmäßig zu optimieren/simulieren. Diese fest durchgeführten Optimierungen/Simulationen werden als regelmäßige Simulationen bezeichnet. Hierbei können mehrere verschieden regelmäßige Simulationen durchgeführt werden. Beispielsweise eine Day-Ahead-Optimierung, eine Intraday-Optimierung und/oder eine Load-Manager-Optimierung. Die Day-Ahead-Optimierung, die Intraday-Optimierung und die Load-Manager-Optimierung sind regelmäßige Simulationen. Das Optimierungsmodul 2 weist für jede der genannten regelmäßigen Simulationen ein Modul 21,...,24 auf. Ein erstes Modul 21 ist für die Day-Ahead-Optimierung vorgesehen. Ein zweites Modul 22 ist für die Intraday-Optimierung vorgesehen. Ein drittes Modul 23 ist für die Load-Manager-Optimierung vorgesehen. Weiterhin weist das Optimierungsmodul 2 ein viertes Modul 24 auf, welches beispielsweise für eine Vorhersage des Betriebes des Energiesystems (Prognosemodul), für eine Konfiguration des Energiesystems und/oder dessen Komponenten, und/oder für das Erfassen und/oder Bereitstellen und/oder Speichern von Modellparametern für die Simulationen vorgesehen ist. Aus der Figur ist ebenfalls erkennbar, dass die Module 21,...,24 Daten untereinander austauschen können.

Weiterhin ist in der Figur eine Steuervorrichtung 5 dargestellt. Das Energiesystem oder das Energiemanagementsystem 1 umfasst die Steuervorrichtung 5. Die Steuervorrichtung 5 ist dazu ausgebildet, basierend auf den Simulationen des Energiemanagementsystem beziehungsweise basierend auf einem Energiemanagementverfahren gemäß der vorliegenden Erfindung oder einer ihrer Ausgestaltungen die Komponenten des Energiesystems und somit den Betrieb des Energiesystems entsprechend zu steuern und/oder zu regeln.

Das Energiemanagementsystem 1 weist weiterhin eine Datenschnittstelle zu einem externen Rechenzentrum 3 auf. Das Rechenzentrum 3 ist insbesondere ein verteiltes Rechenzentrum, ein Server und/oder ein Cloud-Server. Die Datenschnittstelle zwischen dem Energiemanagementsystem 1 und dem Rechenzentrum 3 ist derart ausgestaltet, dass Simulationen an das Rechenzentrum ausgelagert werden können und das Ergebnis der Simulationen wiederum an das Energiemanagementsystem 1 zurück übertragen werden kann. Eine Auslagerung ist beispielsweise vorteilhaft, falls das Energiemanagementsystem 1 zum Zeitpunkt der Simulation zu wenig Rechenleistung aufweist, beispielsweise Turbo-Modes von Prozessoren nicht zur Verfügung stehen, oder die Datenmengen insgesamt zu umfangreich sind.

Weiterhin ist in der Figur ein Energiemarkt 4, insbesondere ein lokaler Energiemarkt dargestellt. Das Energiemanagementsystem 1 ist mit dem Energiemarkt 4 ebenfalls zum Datenaustausch gekoppelt. Hierbei können die einzelnen Module 21,...,24 des Optimierungsmoduls 2 mit dem Energiemarkt 4 zum Datenaustausch gekoppelt sein. Mit anderen Worten ist das Energiemanagementsystem 1 mit dem Energiemarkt 4 bezüglich des Austausches von Daten, Information beziehungsweise Datencontainern verbunden. Der Datenaustausch mit dem Energiemarkt 4 kann bevorzugt mittels einer Blockkette (Blockchain) erfolgen.

Das Energiemanagementsystem 1 ist dazu ausgestaltet ein Energiemanagementverfahren gemäß der vorliegenden Erfindung und/oder einer ihrer Ausgestaltungen durchzuführen. Insbesondere ist bereits das Optimierungsmodul 2, welches das Energiemanagementsystem 1 umfasst, dazu ausgestaltet ein Energiemanagementsystem gemäß der vorliegenden Erfindung und/oder einer ihrer Ausgestaltungen durchzuführen.

Somit ist mittels des Optimierungsmoduls 2 ein Betrieb des Energiesystems für einen vorab festgelegten Zeithorizont mit einer vorab festgelegten Zeitschrittweite gemäß einem vorab festgelegten zeitlichen Aufrufintervalls regelmäßig simulierbar.

In Abhängigkeit eines Parameters, das heißt beispielsweise in Abhängigkeit der Art des Parameters und/oder des Wertes des Parameters, ist
- mittels des Optimierungsmoduls 2 bei einer Veränderung des Parameters eine vom vorab festgelegten Aufrufintervall abweichende zusätzliche Simulation des Betriebes des Energiesystems in Abhängigkeit des veränderten Parameters durchführbar; und/oder
- mittels des Optimierungsmoduls 2 innerhalb kritischer Zeitbereiche, in welchen der Wert des Parameters oberhalb eines vorab festgelegten Schwellenwertes ist, wenigstens eine in den kritischen Zeitbereich fallende regelmäßige Simulation mit einer zur vorab festgelegten Zeitschrittweite kleineren oder größeren Zeitschrittweite durchführbar.

Erfindungsgemäß ist der Parameter eine energiesystemintern erneuerbar erzeugte elektrische Leistung.

Mit anderen Worten ist das Optimierungsmodul 2 dazu ausgebildet in Abhängigkeit des Parameters eine zusätzliche vom regelmäßigen und festgelegten Ablauf der Simulationen abweichende zusätzliche Simulation durchzuführen und/oder die Zeitschrittweite der regelmäßigen Simulationen innerhalb der kritischen Zeitschrittweite zu verändern, bevorzugt zu verkleinern. Der Auslöser (Trigger) der zusätzlichen Simulation ist eine Änderung des Wertes des Parameters, das heißt eine Änderung einer erneuerbar erzeugten elektrischen Leistung/Energie. Der Auslöser der Verwendung einer kleineren Zeitschrittweite ist das Vorliegen eines kritischen Zeitbereiches. Weiterhin kann die zusätzliche Simulation ebenfalls mit einer im Vergleich zur festgelegten Zeitschrittweite kleineren Zeitschrittweite durchgeführt werden.

Das Energiemanagementsystem 1 beziehungsweise das Optimierungsmodul 2 ist dazu ausgebildet bei einer Änderung einer erneuerbar erzeugten elektrischen Leistung/Energie eine zusätzliche Simulation durchzuführen.

In dem obenstehend beschriebenen Sinne hängt das Durchführen einer zusätzlichen Simulation oder das Durchführen einer regelmäßigen Simulation mit einer verkleinerten Zeitschrittweite von der erneuerbar erzeugte elektrische Leistung/Energie ab. Dadurch kann das Energiemanagementsystem 1 dynamisch auf Veränderungen beziehungsweise Änderungen von Parameter reagieren, wodurch der Betrieb des Energiesystems effizienter und somit verbessert wird. Mit anderen Worten werden die bekannten starren beziehungsweise festen regelmäßigen Simulationen durch die vorliegende Erfindung oder durch eine ihrer Ausgestaltungen dynamisiert.

### Bezugszeichenliste

- 1: Energiemanagementsystem
- 2: Simulationsmodul
- 3: Rechenzentrum
- 4: Energiemarkt
- 5: Steuervorrichtung
- 21: Day-Ahead Optimierung
- 22: Intraday Optimierung
- 23: Load Manager Optimierung
- 24: Prognosemodul

## Patentansprüche

1. Computergestütztes Energiemanagementverfahren für ein Energiesystem, bei dem mittels einer Steuervorrichtung (5) der Betrieb des Energiesystems basierend auf einer oder mehreren Simulationen des Betriebes gesteuert wird, wobei der Betrieb des Energiesystems für einen festgelegten Zeithorizont mit einer festgelegten Zeitschrittweite gemäß einem festgelegten zeitlichen Aufrufintervall mittels einem Optimierungsmodul (2), das mit der Steuervorrichtung (5) zum Datenaustauch gekoppelt ist, regelmäßig simuliert wird, **gekennzeichnet dadurch, dass** in Abhängigkeit einer energiesystemintern erneuerbar erzeugten elektrischen Leistung
- bei einer Veränderung der erneuerbar erzeugten elektrischen Leistung eine vom festgelegten Aufrufintervall abweichende zusätzliche Simulation des Betriebes des Energiesystems in Abhängigkeit des veränderten erneuerbar erzeugten elektrischen Leistung durchgeführt wird; und/oder
- innerhalb kritischer Zeitbereiche, in welchen der Wert der erneuerbar erzeugten elektrischen Leistung oberhalb eines vorab festgelegten Schwellenwertes ist, wenigstens eine in den kritischen Zeitbereich fallende regelmäßige Simulation mit einer zur festgelegten Zeitschrittweite kleineren oder größeren Zeitschrittweite durchgeführt wird; wobei
- das Energiesystem gemäß der zusätzlichen Simulation und/oder der regelmäßigen Simulation betrieben wird.

2. Computergestütztes Energiemanagementverfahren gemäß Anspruch 1, **gekennzeichnet dadurch, dass** die zusätzliche Simulation mittels eines Rechenzentrums (3), insbesondere mittels eines Servers und/oder Cloud-Servers, durchgeführt wird.

3. Computergestütztes Energiemanagementverfahren gemäß einem der vorhergehenden Ansprüche, **gekennzeichnet dadurch, dass** eine in den kritischen Zeitbereich fallende regelmäßige Simulation mit einer kleineren Zeitschrittweite mittels eines Rechenzentrums, insbesondere mittels eines Servers und/oder Cloud-Servers, durchgeführt wird.

4. Computergestütztes Energiemanagementverfahren gemäß Anspruch 2 oder 3, **gekennzeichnet dadurch, dass** die zusätzliche Simulation und/oder die in den kritischen Zeitbereich fallende regelmäßige Simulation dann an das Rechenzentrum (3) ausgelagert wird, wenn das Rechenzentrum (3) größtenteils mit erneuerbar erzeugter Energie betrieben wird.

5. Computergestütztes Energiemanagementverfahren gemäß einem der vorhergehenden Ansprüche, **gekennzeichnet dadurch, dass** die zusätzliche Simulation ebenfalls mit einer bezüglich der vorab festgelegten Zeitschrittweite kleineren oder größeren Zeitschrittweite durchgeführt wird.

6. Computergestütztes Energiemanagementverfahren gemäß einem der vorhergehenden Ansprüche, bei dem eine zusätzliche Simulation mit einer kleineren Zeitschrittweite innerhalb eines zeitlichen Endbereiches der vorab festgelegten Zeitschrittweite einer regelmäßigen Simulation durchgeführt wird.

7. Computergestütztes Energiemanagementverfahren gemäß einem der vorhergehenden Ansprüche, **gekennzeichnet dadurch, dass** der Zeithorizont auf 24 Stunden, die Zeitschrittweite auf 15 Minuten und das Aufrufintervall auf 24 Stunden festgelegt wird; oder der Zeithorizont auf 24 Stunden, die Zeitschrittweite auf 15 Minuten und das Aufrufintervall auf 1 Stunde festgelegt wird; oder der Zeithorizont auf 1 Stunde, die Zeitschrittweite auf 1 Minute und das Aufrufintervall auf 1 Minute festgelegt wird.

8. Computergestütztes Energiemanagementverfahren gemäß einem der vorhergehenden Ansprüche, **gekennzeichnet dadurch, dass** die regelmäßigen Simulationen und/oder die zusätzliche Simulation mittels eines Optimierungsverfahrens berechnet wird.

9. Energiemanagementsystem (1) für ein Energiesystem, umfassend eine Steuervorrichtung (5), mittels welcher der Betrieb des Energiesystems basierend auf einer oder mehreren Simulationen des Betriebes steuerbar ist, ein Optimierungsmodul (2), das mit der Steuervorrichtung (5) zum Datenaustausch gekoppelt ist und mittels welchem ein Betrieb des Energiesystems für einen vorab festgelegten Zeithorizont mit einer vorab festgelegten Zeitschrittweite gemäß einem vorab festgelegten zeitlichen Aufrufintervalls regelmäßig simulierbar ist, **dadurch gekennzeichnet, dass** in Abhängigkeit einer energiesystemintern erzeugten erneuerbar erzeugten elektrischen Leistung
- mittels des Optimierungsmoduls (2) bei einer Veränderung der erneuerbar erzeugten elektrischen Leistung eine vom vorab festgelegten Aufrufintervall abweichende zusätzliche Simulation des Betriebes des Energiesystems in Abhängigkeit der erneuerbar erzeugten elektrischen Leistung durchführbar ist; und/oder
- mittels des Optimierungsmoduls (2) innerhalb kritischer Zeitbereiche, in welchen der Wert der erneuerbar erzeugten elektrischen Leistung oberhalb eines vorab festgelegten Schwellenwertes ist, wenigstens eine in den kritischen Zeitbereich fallende regelmäßige Simulation mit einer zur vorab festgelegten Zeitschrittweite kleineren oder größeren Zeitschrittweite durchführbar ist; wobei
- das Energiesystem gemäß der zusätzlichen Simulation und/oder der regelmäßigen Simulation durch das Energiemanagementsystem betreibbar ist.

10. Energiemanagementsystem (1) gemäß Anspruch 9, **dadurch gekennzeichnet, dass** dieses eine Datenschnittstelle zum Austausch von Datencontainern mit einem bezüglich des Energiemanagementsystems externen Energienetz und/oder externen Energiemarkt (4) aufweist.

11. Energiemanagementsystem (1) gemäß Anspruch 10, **dadurch gekennzeichnet, dass** mittels des Optimierungsmoduls (2) in Abhängigkeit von mittels der Datencontainern über die Datenschnittstelle ausgetauchten Daten eine zusätzliche Simulation und/oder eine Veränderung der Zeitschrittweite einer der regelmäßigen Simulationen durchführbar ist.

## Claims

1. Computer-aided energy management method for an energy system, in which the operation of the energy system is controlled by means of a control device (5) based on one or more simulations of operation, wherein the operation of the energy system is regularly simulated according to a set call time interval for a set time horizon with a set time increment by means of an optimization module (2) coupled to the control device (5) for the purpose of exchanging data, **characterized in that**, depending on an electrical power that is renewably generated inside the energy system,
- if the renewably generated electrical power changes, an additional simulation of the operation of the energy system deviating from the set call interval is performed depending on the changed renewably generated electrical power; and/or
- within critical time ranges in which the value of the renewably generated electrical power is above a preset threshold value, at least one regular simulation which falls within the critical time range is performed with a time increment which is smaller or greater than the set time increment; wherein
- the energy system is operated according to the additional simulation and/or the regular simulation.

2. Computer-aided energy management method according to Claim 1, **characterized in that** the additional simulation is performed by means of a data centre (3), in particular by means of a server and/or cloud server.

3. Computer-aided energy management method according to one of the preceding claims, **characterized in that** a regular simulation falling within the critical time range is performed with a smaller time increment by means of a data centre, in particular by means of a server and/or cloud server.

4. Computer-aided energy management method according to Claim 2 or 3, **characterized in that** the additional simulation and/or the regular simulation falling within the critical time range is/are transferred to the data centre (3) if the data centre (3) is mainly operated with renewably generated energy.

5. Computer-aided energy management method according to one of the preceding claims, **characterized in that** the additional simulation is similarly performed with a smaller or greater time increment compared with the preset time increment.

6. Computer-aided energy management method according to one of the preceding claims, in which an additional simulation is performed with a smaller time increment within a final time range of the preset time increment of a regular simulation.

7. Computer-aided energy management method according to one of the preceding claims, **characterized in that** the time horizon is set to 24 hours, the time increment to 15 minutes and the call interval to 24 hours; or the time horizon is set to 24 hours, the time increment to 15 minutes and the call interval to 1 hour; or the time horizon is set to 1 hour, the time increment to 1 minute and the call interval to 1 minute.

8. Computer-aided energy management method according to one of the preceding claims, **characterized in that** the regular simulations and/or the additional simulation is/are calculated by means of an optimization method.

9. Energy management system (1) for an energy system, comprising a control device (5), by means of which the operation of the energy system can be controlled based on one or more simulations of operation, an optimization module (2), which is coupled to the control device (5) for the purpose of exchanging data and by means of which operation of the energy system can be regularly simulated according to a preset call time interval for a preset time horizon with a preset time increment, **characterized in that**, depending on an electrical power that is renewably generated inside the energy system,
- in the event of a change in the renewably generated electrical power, an additional simulation of the operation of the energy system deviating from the preset call interval can be performed by means of the optimization module (2) depending on the renewably generated electrical power; and/or
- within critical time ranges in which the value of the renewably generated electrical power is above a preset threshold value, at least one regular simulation which falls within the critical time range can be performed by means of the optimization module (2) with a time increment which is smaller or greater than the preset time increment; wherein
- the energy system can be operated by the energy management system according to the additional simulation and/or the regular simulation.

10. Energy management system (1) according to Claim 9, **characterized in that** it has a data interface for exchanging data containers with an external energy network and/or an external energy market (4) outside the energy management system.

11. Energy management system (1) according to Claim 10, **characterized in that** an additional simulation and/or a change in the time increment of one of the regular simulations can be performed by means of the optimization module (2) depending on data exchanged by means of the data containers via the data interface.

## Revendications

1. Procédé de gestion d'énergie assistée par ordinateur pour un système d'énergie, dans lequel, au moyen d'un dispositif (5) de commande, on commande le fonctionnement du système d'énergie sur la base d'une ou de plusieurs simulations du fonctionnement, dans lequel on simule normalement le fonctionnement du système d'énergie pour un horizon temporel déterminé avec un pas de progression temporelle déterminé suivant un intervalle d'appel déterminé, au moyen d'un module (2) d'optimisation, que l'on couple au dispositif (5) de commande pour l'échange de données, **caractérisé en ce que**, en fonction d'une puissance électrique produite de manière renouvelable de manière interne au système d'énergie,
- si la puissance électrique produite de manière renouvelable se modifie, on effectue, en fonction de la puissance électrique produite de manière renouvelable modifiée, une simulation supplémentaire du fonctionnement du système d'énergie s'écartant de l'intervalle d'appel déterminé ; et/ou
- dans des laps de temps critiques, dans lesquels la valeur de la puissance électrique produite de manière renouvelable est au-dessus d'une valeur de seuil déterminée à l'avance, on effectue, avec un pas de progression temporelle plus petit ou plus grand que le pas de progression temporelle déterminé, une simulation normale tombant dans le laps de temps critique ; dans lequel
- on fait fonctionner le système d'énergie suivant la simulation supplémentaire et/ou suivant la simulation normale.

2. Procédé de gestion d'énergie assistée par ordinateur suivant la revendication 1, **caractérisé en ce que** l'on effectue la simulation supplémentaire au moyen d'un centre (3) informatique, en particulier au moyen d'un serveur et/ou d'un serveur à nuage.

3. Procédé de gestion d'énergie assistée par ordinateur suivant l'une des revendications précédentes, **caractérisé en ce que** l'on effectue une simulation normale tombant dans le laps de temps critique avec un pas de progression temporelle plus petit au moyen d'un centre informatique, en particulier au moyen d'un serveur et/ou d'un serveur à nuage.

4. Procédé de gestion d'énergie assistée par ordinateur suivant la revendication 2 ou 3, **caractérisé en ce que** l'on transfère la simulation supplémentaire et/ou la simulation normale tombant dans le laps de temps critique au centre (3) informatique, lorsque l'on fait fonctionner le centre (3) informatique pour la grande partie avec une énergie produite de manière renouvelable.

5. Procédé de gestion d'énergie assistée par ordinateur suivant l'une des revendications précédentes, **caractérisé en ce que** l'on effectue la simulation supplémentaire également avec un pas de progression temporelle plus petit ou plus grand que le pas de progression temporelle déterminé à l'avance.

6. Procédé de gestion d'énergie assistée par ordinateur suivant l'une des revendications précédentes, dans lequel on effectue une simulation supplémentaire avec un pas de progression temporelle plus petit dans une partie temporelle d'extrémité du pas de progression temporelle déterminé à l'avance d'une simulation normale.

7. Procédé de gestion d'énergie assistée par ordinateur suivant l'une des revendications précédentes, **caractérisé en ce que** l'on fixe l'horizon temporel à 24 heures, le pas de progression temporelle à 15 minutes et l'intervalle d'appel à 24 heures ; ou l'on fixe l'horizon temporel à 24 heures, le pas de progression temporelle à 15 minutes et l'intervalle d'appel à 1 heure ; ou l'on fixe l'horizon temporel à 1 heure, le pas de progression temporelle à 1 minute et l'intervalle d'appel à 1 minute.

8. Procédé de gestion d'énergie assistée par ordinateur suivant l'une des revendications précédentes, **caractérisé en ce que** l'on calcule, au moyen d'un procédé d'optimisation, les simulations normales et/ou la simulation supplémentaire.

9. Système (1) de gestion d'énergie pour un système d'énergie comprenant un dispositif (5) de commande, au moyen duquel le fonctionnement du système d'énergie peut être commandé sur la base d'une ou de plusieurs simulations du fonctionnement, un module (2) d'optimisation, qui est couplé au dispositif (5) de commande pour l'échange de données et au moyen duquel un fonctionnement du système d'énergie, pour un horizon temporel déterminé à l'avance avec un pas de progression temporelle déterminé à l'avance suivant un intervalle d'appel temporel déterminé à l'avance, peut être simulé normalement, **caractérisé en ce que**, en fonction d'une puissance électrique produite de manière renouvelable de manière interne au système d'énergie,
- au moyen du module (2) d'optimisation, si la puissance électrique produite de manière renouvelable se modifie, une simulation supplémentaire du fonctionnement du système d'énergie, s'écartant de l'intervalle d'appel déterminé auparavant, peut être effectuée, en fonction de la puissance électrique produite de manière renouvelable ; et/ou
- au moyen du module (2) d'optimisation, dans des laps de temps critiques, dans lesquels la valeur de la puissance électrique produite de manière renouvelable est au-dessus d'une valeur de seuil déterminée, au moins une simulation normale tombant dans le laps de temps critique peut être effectuée avec un pas de progression temporelle plus grand ou plus petit qu'un pas de progression temporelle déterminé à l'avance ; dans lequel
- le système d'énergie peut être mis en fonctionnement par le système de gestion d'énergie suivant la simulation supplémentaire et/ou la simulation normale.

10. Système (1) de gestion d'énergie suivant la revendication 9, **caractérisé en ce que** celui-ci a une interface de données pour l'échange de conteneurs de données avec un réseau d'énergie extérieur au système de gestion d'énergie et/ou un marché (4) de l'énergie extérieur.

11. Système (1) de gestion d'énergie suivant la revendication 10, **caractérisé en ce que**, au moyen du module (2) d'optimisation, en fonction de données échangées au moyen des conteneurs de données en passant par l'interface de données, une simulation supplémentaire et/ou une modification du pas de progression temporelle de l'une des simulations normales peut être effectuée.
